(19) **Europäisches Patentamt**

**European Patent Office**

**Office européen des brevets**

(11) **EP 1 659 140 A1**

(12) **EUROPÄISCHE PATENTANMELDUNG**

(43) Veröffentlichungstag:
24.05.2006 Patentblatt 2006/21

(51) Int Cl.:
*C08G 18/48* (2006.01)      *C08L 101/00* (2006.01)

(21) Anmeldenummer: 05110375.2

(22) Anmeldetag: 04.11.2005

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(30) Priorität: **18.11.2004  DE 102004055672**

(71) Anmelder: **HILTI Aktiengesellschaft
9494 Schaan (LI)**

(72) Erfinder: **Leitner, Michael
86899, Landsberg (DE)**

(74) Vertreter: **Wildi, Roland
Hilti Aktiengesellschaft,
Corporate Intellectual Property,
Feldkircherstrasse 100,
Postfach 333
9494 Schaan (LI)**

(54) **Verwendung von hoch-verzweigten Polyolen für die Herstellung von Polyurethanschäumen und sie enthaltende Zweikomponenten-Schaumsysteme**

(57)    Beschrieben werden die Verwendung von hoch-verzweigten und/oder dendritischen Polyolen mit einer zahlenmittleren Molmasse (Mn) von 500 bis 100.000 g/Mol, vorzugsweise 1.000 bis 10.000 g/Mol, und einer durchschnittlichen OH-Funktionalität pro Molekül von 10 bis 1000, vorzugsweise von 25 bis 100, als Polyol für die Herstellung von Polyurethanschäumen mit einem erhöhten Verhältnis von Druckfestigkeit zu Dichte, ein Zweikomponenten-Sehaumsystem für die Herstellung von Polyurethanschäumen mit erhöhtem Verhältnis von Druckfestigkeit zu Dichte, mit einer Polyisocyanatkomponente (A) und einer reaktive Wasserstoffatome aufweisende Verbindungen enthaltenden Komponente (B) (Polyolkomponente), die in getrennten Behältern vorliegen und zur Anwendung durch Vermischen zur Reaktion bringbar sind, das dadurch gekennzeichnet ist, daß die Polyolkomponente (B) 1 bis 50 Gew.-%, vorzugsweise 2 bis 30 Gew.-%, bezogen auf das Gewicht der reaktive Wasserstoffatome aufweisenden Verbindungen der Polyolkomponente (B), mindestens eines hoch-verzweigten und/oder dendritischen Polyols (B1) mit einer zahlenmittleren Molmasse (Mn) von 500 bis 100.000 g/Mol, vorzugsweise 1000 bis 10.000 g/Mol und einer durchschnittlichen OH-Funktionalität pro Molekül von 10 bis 1.000, vorzugsweise von 25 bis 100, enthält, sowie die Verwendung dieses Zweikomponenten-Schaumsystems als Montageschaum, insbesondere für die Montage von Tür- und Fensterzargen oder von Treppen und/oder als Brandschutzschaum zur Abdichtung von Durchbrüchen und/oder Durchführungen in Wänden und/oder Decken von Gebäuden.

**EP 1 659 140 A1**

**Beschreibung**

Gegenstand der vorliegenden Erfindung ist die Verwendung von hoch-verzweigten und/oder dendritischen Polyolen für die Herstellung von Polyurethanschäumen, insbesondere semi-harten oder harten Polyurethanschäumen, mit einem erhöhten Verhältnis von Druckfestigkeit zu Dichte, Zweikomponenten-Schaumsysteme für die Herstellung von Polyurethanschäumen dieser Art, welche solche hoch-verzweigten und/oder dendritischen Polyole in der Polyol-komponente enthalten, sowie die Verwendung solcher Zweikomponenten-Schaumsysteme als Montageschaum, insbesondere für die Montage von Tür- und Fensterzargen, als Treppenschaum und/oder als Brandschutzschaum zur Abdichtung von Durchbrüchen und/oder Durchführungen in Wänden und/oder Decken von Gebäuden.

Harte Polyurethanschäume werden auf vielfältige Weise eingesetzt, beispielsweise als Montageschäume für die Montage von Tür- und Fensterzargen und Treppen oder aber auch als Brandschutzschaum. Bei diesen Anwendungen spielt die mechanische Belastbarkeit des Polyurethanschaums eine große Rolle, da der Schaum nach mechanischer Überbeanspruchung nicht mehr in ausreichendem Maße seine originäre Funktion erfüllen kann. Als anerkanntes Kriterium für die mechanische Belastbarkeit eines solchen Schaumes gilt dessen Druckfestigkeit, die in standardisierten Druckversuchen, insbesondere nach der DIN Norm 53 421 gemessen werden kann.

Grundsätzlich ist die Druckfestigkeit eines Schaumes zu seiner Dichte proportional, das heißt, je höher die Schaumdichte ist, umso höher ist die Druckfestigkeit eines chemisch gleichartigen Schaumsystems. So besitzen beispielsweise handelsübliche Polyurethanschäume bei einer Dichte von 0,03 g/cm$^3$ eine Druckfestigkeit von 0, 11 MPa, bei einer Dichte von 0,05 g/cm$^3$ eine Druckfestigkeit von 0,20 MPa und bei einer Dichte von 0,09 g/cm$^3$ eine Druckfestigkeit von 0,60 MPa.

Im allgemeinen wird die Druckfestigkeit von harten Polyurethanschaumsystemen dadurch erhöht, daß man entweder geeignete anorganische Füllstoffe, wie beispielsweise Glasfasern, oder organische Weichmacher, wie beispielsweise Phthalatverbindungen, in die Ausgangsmischung für die Herstellung des Polyurethanschaums einbringt. Dies ist aber insoweit nachteilig, als die Zugabe von Füllstoffen zu einem Anstieg der Schaumdichte führt und andererseits die Druckfestigkeit des Schaumsystems mit der Zeit nachläßt, da die Füllstoffe und auch die organischen Weichmacher in die und aus der Schaummatrix wandern können, weil sie nicht kovalent in das Polyurethannetzwerk der Schaummatrix eingebaut sind.

Andererseits sind die Hersteller und die Anwender von Polyurethanschäumen, insbesondere für die Verwendung als Montageschaum, daran interessiert, die Schaumdichte möglichst niedrig zu halten, da hierdurch die für das Ausschäumen eines bestimmten Volumens notwendige Masse an Ausgangsstoffen verringert werden kann, wodurch der Materialaufwand und somit die Kosten für die Herstellung und die Verwendung dieses Schaums minimiert werden können.

Der vorliegenden Erfindung liegt demzufolge die technische Aufgabe zugrunde, die Druckfestigkeit von harten Polyurethanschaumsystemen zu steigern, ohne deren Dichte zu erhöhen, beziehungsweise die Dichte eines Schaumsystems zu senken, ohne seine Druckfestigkeit zu verschlechtern, also Polyurethanschäume mit einem erhöhten Verhältnis von Druckfestigkeit zu Dichte zu schaffen.

Es hat sich überraschenderweise gezeigt, daß diese Aufgabe dadurch gelöst werden kann, daß man bestimmte hoch-verzweigte und/oder dendritische Polyole als Polyol oder in der Polyolkomponente für die Herstellung von harten Polyurethanschäumen verwendet.

Gegenstand der vorliegenden Erfindung ist daher die Verwendung von hoch-verzweigten und/oder dendritischen Polyolen mit einer zahlenmittleren Molmasse ($M_n$) von 500 bis 100.000 g/Mol, vorzugsweise 1.000 bis 10.000 g/Mol, und einer durchschnittlichen OH-Funktionalität pro Molekül von 10 bis 1000, vorzugsweise von 25 bis 100, als Polyol für die Herstellung von Polyurethanschäumen mit einem erhöhten Verhältnis von Druckfestigkeit zu Dichte.

Vorzugsweise besitzt das erfindungsgemäß verwendete hoch-verzweigte und/oder dendritische Polyol einen durchschnittlichen Verzweigungsgrad von grö-βer Null bis kleiner oder gleich 1,0, vorzugsweise von 0,2 bis 0,66, noch bevorzugter von 0,53 bis 0,59, wobei definitionsgemäß rein lineare Polyole einen Verzweigungsgrad von Null und ideal dendrimere Polyole einen Verzweigungsgrad von 1,0 besitzen.

Bezüglich der Definition von hoch-verzweigten und/oder dendritischen Polyolen, ihrer Herstellung und der Definition ihrer Molmasse und ihres Verzweigungsgrades, sowie deren Bestimmung sei auf die Veröffentlichung von Alexander Sunder et al. zu diesen hoch-verzweigten und dendritischen Polyolen in Macromolecules, 1999, 32, 4240-4246 verwiesen. Solche hoch-verzweigten und/oder dendritischen Polyole werden durch Polymerisation von Monomeren des Typs $AB_m$ hergestellt, beispielsweise durch Polymerisation von Glycidol, einem cyclischen Monomer des Typs $AB_2$, welches bei seiner Polymerisation ein Polyether-Polyol ergibt. Bei der Polymerisation von Glycidol werden lineare 1,3-Einheiten, lineare 1,4-Einheiten, dendritische Einheiten und terminale Einheiten gebildet. Bei den linearen Homopolymeren mit der 1,3- beziehungsweise 1,4-Verknüpfung ergibt sich ein durchschnittlicher Verzweigungsgrad der gebildeten Homopolymeren von O, während ideal dendrimere Homopolymere einen durchschnittlichen Verzweigungsgrad von 1, 0 aufweisen. Dabei ist der durchschnittliche Verzweigungsgrad DB (degree of branching) durch die folgende in der genannten Literaturstelle offenbarten Gleichung definiert:

$$DB = \frac{2D}{2D + L_{13} + L_{14}}$$

In der obigen Gleichung stehen D für die dendritischen Einheiten, $L_{13}$ für die linearen 1,3-Einheiten und $L_{14}$ für die linearen 1,4-Einheiten. Entsprechend der angegebenen Literaturstelle läßt sich der durchschnittliche Verzweigungsgrad durch $^{13}$C-NMR-Spektroskopie bestimmen.

Die zahlenmittlere Molmasse (Mn) der erfindungsgemäß eingesetzten hoch-verzweigten und/oder dendritischen Polyole läßt sich, ebenso wie der durchschnittliche Verzweigungsgrad, mit Hilfe der $^1$H- und $^{13}$C-NMR-Spektren bestimmen beziehungsweise aus der mit diesen Spektren ermittelten Integralen der einzelnen in dem Polymer enthaltenen Struktureinheiten berechnen.

Auf der Basis dieser experimentell ermittelbaren Struktureinheiten ergibt sich für die hoch-verzweigten Polyole, wie sie erfindungsgemäß eingesetzt werden, folgender Ausdruck für den mittleren Polymerisationsgrad ($D\bar{P}_n$):

$$D\bar{P}_n = \frac{T + L_{13} + L_{14} + D}{T - D} f_c \quad ,$$

worin $f_c$ für die Funktionalität des Kernmoleküls steht.

Der mittlere Polymerisationsgrad entspricht der Summe der Integrale der einzelnen in dem Polymer enthaltenen Struktureinheiten in den genannten Spektren.

Die OH-Funktionalität der erfindungsgemäß eingesetzten Polyole entspricht der Anzahl an terminalen Stuktureinheiten T pro Molekül, das heißt im Fall von Polyolen der Anzahl der terminalen Hydroxylgruppen pro Molekül und beträgt 100 bis 1000, vorzugsweise 25 bis 100, noch bevorzugter 20 bis 40, insbesondere 25 bis 30.

Es hat sich überraschenderweise gezeigt, daß die erfindungsgemäß eingesetzten hoch-verzweigten und/oder dendritischen Polyole mit ihrer hohen OH-Funktionalität zu extrem hohen Vernetzungsdichten führen, die in Abhängigkeit von ihrer Konzentration in der gesamten Polyolmischung zu harten Polyurethanschäumen mit signifikant höherer Druckfestigkeit bei gleicher Dichte führen. Dieses Ergebnis ist als überraschend anzusehen, da der Fachmann erwarten mußte, daß die Sprödigkeit des Polyurethanschaums steigen sollte, wenn in zunehmendem Maße Vernetzungsmoleküle eingesetzt werden, die deutlich mehr als 5 Vernetzungsstellen pro Molekül aufweisen. Mit zunehmender Sprödigkeit eines Schaumes war daher mit einer Verringerung ihrer Druckfestigkeit zu rechnen. Es hat sich jedoch überraschenderweise herausgestellt, daß es erfindungsgemäß möglich wird, durch die Verwendung dieser hoch-verzweigten und/oder dendritischen Polyole in einer Menge im Bereich von 1 bis 50 Gew.-%. vorzugsweise 2 bis 30 Gew.-%, bezogen auf das Gewicht der reaktiven Wasserstoffatome aufweisenden Verbindungen der Polyolkomponente eines Polyurethanschaumsystems, eine deutlich höhere Druckfestigkeit des gebildeten harten Polyurethanschaums bei gleichbleibender Dichte zu erzielen.

Durch entsprechende Variation der Konzentration des hoch-verzweigten und/oder dendritischen Polyols in der Polyolkomponente des PolyurethanSchaumsystems lassen sich bereits bewährte Polyurethan-Schaumsysteme bezüglich ihrer Druckfestigkeit auf einfache Weise weiter verbessern. Da erfindungsgemäß keine unlöslichen anorganischen Füllstoffe in die Polyurethanschäume eingebracht werden müssen, um deren Druckfestigkeit zu erhöhen, fallen auch die Nachteile, wie die Migration der Fülllstoffe in dem Polyurethanschaum, die hohe Viskosität der auszubringenden Mischung und die für diese Füllstoffe beziehungsweise Weichmacher aufzuwendenden Kosten an. Allerdings ist es natürlich im Rahmen der Erfindung möglich, die üblicherweise eingesetzten anorganischen und/oder organischen Füllstoffe weiterhin zu verwenden, um in dieser Weise die Dichte oder andere Eigenschaften des Polyurethanschaumes gezielt zu beeinflussen.

Gemäß einer bevorzugten Ausführungsform der Erfindung weist das erfindungsgemäß verwendete hoch-verzweigte und/oder dendritische Polyol eine OH-Zahl von 50 bis 5.000, vorzugsweise von 200 bis 1.000 auf.

Die OH-Zahl kann mit Hilfe einer Endgruppentitration der erfindungsgemäß eingesetzten Polyole bestimmt werden. Dabei werden die terminalen oder endständigen OH-Gruppen in Gegenwart eines bekannten Überschusses an Phthalsäureanhydrid oder eines anderen cyclischen Anhydrids quantitativ verestert. Die Verwendung von cyclischen Anhydriden hat sich bei sekundären Alkoholen bewährt, da sie eine gesteigerte Reaktivität gegenüber den acyclischen Anhydriden aufweisen. Die bei dieser Veresterung gebildete Carbonsäure wird anschließend mit wässriger KOH titriert, über deren Verbrauch die OH-Zahl dann berechnet wird. Die OH-Zahl entspricht der Menge KOH in mg, die pro g des Polymers erforderlich ist, um die gebildete Phthalsäure zu neutralisieren. Bei dieser Umsetzung besteht die Veresterungsmischung aus 450 ml getrocknetem Pyridin, 64,25 g Phthalsäureanhydrid und 10 ml N-Methylimidazol. Zu 25 ml dieser Mischung gibt man 25 ml Pyridin und 50 ml Wasser und titriert dann nach 15 Minuten mit 1 N KOH. Dies entspricht dem Blindvolumen $V_{Blind}$. Eine abgewogene Menge des Polymers ($m_{Probe}$) wird dann während 15 Minuten mit 25 ml der Veresterungsmischung zum Sieden am Rückfluß erhitzt. Anschließend gibt man 25 ml Pyridin und 50 ml Wasser zu, um den Überschuß des Anhydrids zu hydrolysieren. Die Lösung wird dann mit 1 N KOH titriert und man erhält $V_{Probe}$. Jede Polymerprobe wird zweimal vermessen. Die OH-Zahl wird dann mit Hilfe der folgenden Gleichung berechnet:

$$OH - Zahl = (V_{Blind} - V_{Probe}) \cdot \frac{56,1}{m_{Probe}}$$

Die in Rede stehenden erfindungsgemäß eingesetzten hoch-verzweigten und/oder dendritischen Polyole können entweder nach der in der Literaturstelle Sunder et al. für die Herstellung der dort angesprochenen Polyglycerole angegebenen Verfahrensweise oder analog dazu hergestellt werden. Solche hoch-verzweigten und dendritischen Polyole sind auch im Handel erhältlich, so von der Firma Perstorp Polyols Inc., 600 Matzinger Road, Toledo, Ohio 43612, USA, beispielsweise in Form der Produkte Boltom H30 mit einer OH-Funktionalität von 32 und einer OH-Zahl von 500, beziehungsweise als Boltom H40 mit einer OH-Funktionalität von 64 und einer OH-Zahl von 485.

Bei den erfindungsgemäß verwendeten hoch-verzweigten und/oder dendritischen Polyolen kann es sich um Polyether-Polyole, Polyester-Polyole oder Mischungen daraus handeln.

Ein weiterer Gegenstand der Erfindung ist ein Zweikomponenten-Schaumsystem für die Herstellung von Polyurethanschäumen mit erhöhtem Verhältnis von Druckfestigkeit zu Dichte, mit einer Polyisocyanatkomponente (A) und einer reaktive Wasserstoffatome aufweisende Verbindungen enthaltenden Komponente (B) (Polyolkomponente), die in getrennten Behältern vorliegen und zur Anwendung durch Vermischen zur Reaktion bringbar sind, das dadurch gekennzeichnet ist, daß die Polyolkomponente (B) 1 bis 50 Gew.-%, vorzugsweise 2 bis 30 Gew.-%, bezogen auf das Gewicht der reaktive Wasserstoffatome aufweisenden Verbindungen der Polyolkomponente (B), mindestens eines hoch-verzweigten und/oder dendritischen Polyols (B1) mit einer zahlenmittleren Molmasse (Mn) von 500 bis 100.000 g/Mol, vorzugsweise 1000 bis 10.000 g/Mol und einer durchschnittlichen OH-Funktionalität pro Molekül von 10 bis 1.000, vorzugsweise von 25 bis 100, enthält.

Vorzugsweise enthält diese Zweikomponenten-Schaumsystem in der Polyolkomponente (B) ein hoch-verzweigtes und/oder dendritischen Polyol mit einem durchschnittlichen Verzweigungsgrad von größer Null bis kleiner oder gleich 1,0, vorzugsweise von 0,2 bis 0,66, noch bevorzugter von 0,53 bis 0,59, wie es oben definiert worden ist. Vorzugsweise weist das hoch-verzweigte und/oder dendritische Polyol eine OH-Zahl von 50 bis 5.000, bevorzugter von 200 bis 1.000 auf.

Die Polyisocyanatkomponente (A) dieses erfindungsgemäßen Zweikomponenten-Schaumsystems umfaßt mindestens ein Polyisocyanat mit einem NCO-Gehalt von 5 bis 55%, vorzugsweise 20 bis 50%, und einer durchschnittlichen Anzahl von 2 bis 5, vorzugsweise 2 bis 4 NCO-Gruppen pro Molekül.

Gemäß einer bevorzugten Ausführungsform umfaßt die Polyisocyanatkomponente (A) ein Polyisocyanat auf der Grundlage von Methylendiphenyldiisocyanat und/oder polymeren Homologen davon, wobei solche Polyisocyanate mit einem NCO-Gehalt von 31 % und durchschnittlich 2,7 NCO-Gruppen pro Molekül besonders bevorzugt sind.

Die Polyolkomponente (B) des erfindungsgemäßen Zweikomponenten-Schaumsystems kann neben dem hoch-verzweigten und/oder dendritischen Polyol (B1) mindestens ein üblicherweise für die Herstellung von Polyurethanschäumen geeignetes Polyol (B2) mit einer OH-Zahl von 30 bis 1.000, vorzugsweise von 500 bis 1.000, und einer durchschnittlichen 011-Funktionalität pro Molekül von 2 bis 7, vorzugsweise 2 bis 5, umfassen. Solche Polyole (B2) sind dem Fachmann für die Herstellung von harten Polyurethanschäumen ohne weiteres geläufig.

Vorzugsweise enthält das Zweikomponenten-Schaumsystem als Polyol (B2) mindestens ein Polyether-Polyol und/ oder ein Polyester-Polyol mit einer OH-Zahl von 300 bis 1.000, vorzugsweise 500 bis 1.000 und einer durchschnittlichen OH-Funktionalität von 2 bis 7, vorzugsweise von 2 bis 4 und/oder mindestens ein Aminopolyether-Polyol und/ oder ein Polyol auf der Grundlage von Phosphorsäureester mit einer OH-Zahl von 30 bis 1*.000, vorzugsweise 100 bis 300, und einer durchschnittlichen OH-Funktionalität pro Molekül von 2 bis 7, vorzugsweise von 3 bis 5.

Vorzugsweise liegt die Kennzahl der Polyurethanreaktion im Bereich von 95 bis 165, bevorzugter im Bereich von 102 bis 120. Unter der Kennzahl der Polyurethanreaktion versteht man das prozentuale Verhältnis der eingesetzten Isocyanatgruppen (Stoffmenge der effektiv eingesetzten Isocyanatgruppen : $n_{mco}$), zu den eingesetzten aktiven Wasserstoffatomen (Stoffmenge der effektiv eingesetzten aktiven OH-Funktion : $n_{aktive}H$), die beispielsweise von OH-Gruppen von Polyolen, von $NH_2$-Gruppen von Aminen oder von COOH-Gruppen von Carbonsäuren geliefert werden. Eine stöchiometrische Menge Isocyanat entspricht der Kennzahl 100, ein 10%-iger Überschuß an Isocyanatgruppen entspricht der Kennzahl 110. Die zur Berechnung der Kennzahl der Polyurethanreaktion notwendige Formel lautet wie folgt:

$$Kennzahl = \frac{n_{NCO}}{n_H} \cdot 100$$

Gemäß einer weiteren bevorzugten Ausführungsform der Erfindung enthält die Polyolkomponente (B) Wasser in einer solchen Menge, die einen Polyurethanschaum mit einer Schaumdichte von 0,02 bis 0,5 g/cm³, vorzugsweise von 0,05 bis 0,3 g/cm³, ergibt, einen oder mehrere Katalysatoren für die Polyurethan-Bildungsreaktion und gegebenenfalls einen Schaumzellenstabilisator.

Als Katalysatoren für die Polyurethan-Bildungsreaktion kann die Polyolkomponente (B) ein oder mehrere tertiäre Amine, vorzugsweise Dimorpholindiethylether enthalten. Als Schaumzellenstabilisator kann die Polyolkomponente (B) ein Polysiloxan enthalten.

Gemäß einer weiteren Ausführungsform der Erfindung können die Polyisocyanatkomponente (A) und/oder die Polyolkomponente (B) übliche Füllstoffe, Hilfsstoffe und/oder Additive in üblichen Mengen enthalten.

Es können 0 bis 40 Gew.-%, vorzugsweise 1 bis 20 Gew.-% eines Füllstoffs ausgewählt aus Sand, Kreide, Perlite, Glasfasern, Ruß oder Mischungen davon, 0 bis 2 Gew.-%, vorzugsweise O,1 bis 1 Gew.-% eines oder mehrerer Farbstoffe und/oder 0 bis 40 Gew.-%, vorzugsweise 1 bis 20 Gew.-%, eines brandhemmenden Additivs, jeweils bezogen auf das Gewicht des Zweikomponenten-Schaumsystems, in diesen Komponenten enthalten sein.

Gemäß einer bevorzugten Ausführungsform der Erfindung sind die Behälter, welche die Polyisocyanatkomponente (A) beziehungsweise die Polyolkomponente (B) enthalten, über Zuführungsleitungen mit einer Abgabeeinrichtung mit Mischkopf, in dem die Polyisocyanatkomponente mit der Polyolkomponente vermischt wird, verbunden. Vorzugsweise weist die Abgabeeinrichtung einen Mischkopf in Form eines mit einem statischen Mischer versehen Mundstücks auf. Weiterhin sind die Behälter mit Auspresseinrichtungen versehen, über welche die Polyisocyanatkomponente (A) und die Polyolkomponente (B) in den Mischkopf der Abgabeeinrichtung ausgebracht werden können. Als Auspresseinrichtungen können vorzugsweise mechanische Presseinrichtungen eingesetzt werden und/oder Treibgase, die in der Polyisocyanatkomponente (A) und der Polyolkomponente (B) und/oder in der Druckkammer einer Zweikammerkartusche für diese Komponenten enthalten sind, eingesetzt werden.

Ein weiterer Gegenstand der Erfindung ist die Verwendung des oben definierten Zweikomponenten-Schaumsystems als Montageschaum auf Baustellen, insbesondere für die Montage von Tür- und Fensterzargen und von Treppen und/oder als Brandschutzschaum zur Abdichtung von Durchbrüchen und/oder Durchführungen in Wänden und/oder Decken von Gebäuden. Vorzugsweise werden bei dieser Verwendung die Polyisocyanatkomponente (A) und die Polyolkomponente (B) des Zweikomponenten-Schaumsystems mit Hilfe der Abgabeeinrichtung mit Mischkopf vermischt und in die Montagefugen, den Durchbruch und/oder die Durchführung eingebracht und dort aufgeschäumt und ausgehärtet.

Die folgenden Beispiele und das Vergleichsbeispiel dienen der weiteren Erläuterung der Erfindung.

**BEISPIEL 1**

Herstellung eines harten Polyurethanschaums unter Verwendung von 12% hoch-verzweigtem Polyglycerols (bezogen auf die gesamte Polyolkomponente). Das Polyglycerol wurde nach der von A. Sunder et al. (loc. cit.) beschriebenen Verfahrensweise synthetisiert.

Unter Verwendung der nachfolgend angegebenen Bestandteile für die Polyolkomponente und die Polyisocyanatkomponente bereitet man durch Vermischen der beiden Komponenten und Aufschäumen des Materials einen Polyurethan-Hartschaum.

|  | Bestandteile | OH-Zahl | OH-Funktionalität | Masse/g |
|---|---|---|---|---|
| **Polyol-komponente:** | Polyetherpolyol basierend auf Ethylendiamin und Propylenoxid | 480 | 4 | 20 |
|  | 1,4-Butandiol | 1240 | 2 | 10 |
|  | Polyetherpolyol basierend auf Trimethylolpropan (TMP) | 860 | 3 | 5 |
|  | Polyglycerol | 760 | 27 | 5 |
|  | Wasser | 6250 | 2 | 0.25 |

Tabelle fortgesetzt

| | Bestandteile | OH-Zahl | OH-Funktionalität | Masse/g |
|---|---|---|---|---|
| | Polysiloxan (Zellstabilisator) | ./. | ./. | 3 |
| | Dimorpholindiethylether (Katalysator) | ./. ./. | ./. ./. | 1,2 1,2 |
| | | NCO-Gehalt /% | NCO-Funktionalität | Masse/g |
| **Polyisocyanatkomponente:** | Basierend auf Methylendiphenyldüsocyanat (MDI) und polymeren Homologen des MDI | 31 | 2.7 | 86 |

Die hier und in den folgenden Beispielen nach der DIN Norm 53 421 bestimmte Druckfestigkeit senkrecht zur Schäumungsrichtung bei diesem erfindungsgemäßen Polyurethan beträgt bei einer Dichte von 0,12 g/cm$^3$ 1,9 MPa.

**BEISPIEL 2**

Herstellung eines harten Polyurethanschaums unter Verwendung von 7% des in Beispiel 1 verwendeten hoch-verzweigten Polyglycerols (bezogen auf die gesamte Polyolkomponente).

| | Bestandteile | OH-Zahl | OH-Funktionalität | Masse/g |
|---|---|---|---|---|
| **Polyolkomponente:** | Polyetherpolyol basierend auf Ethylendiamin und Propylenoxid | 480 | 4 | 20 |
| | 1,4-βutandiol | 1240 | 2 | 10 |
| | Polyetherpolyol basierend auf Trimethylolpropan (TMP) | 860 | 3 | 7 |
| | Polyglycerol | 760 | 27 | 3 |
| | Wasser | 6250 | 2 | 0,25 |
| | Polysiloxan (Zellstabilisator) | ./. | ./. | 3 |
| | Dimorpholindiethylether (Katalysator) | ./. | ./. | 1,2 |
| | | NCO-Gehalt /% | NCO-Funktionalität | Masse/g |
| **Polyisocyanakomponente:** | Basierend auf Methylendiphenyldiisocyanat (MDI) und polymeren Homologen des MDI | 31 | 2,7 | 86 |

Die Druckfestigkeit dieses erfindungsgemäßen Polyurethanhartschaums senkrecht zur Schäumungsrichtung beträgt bei einer Dichte von 0,12 g/cm$^3$ 1,7 MPa.

**VERGLEICHSBEISPIEL**

Herstellung eines harten Polyurethanschaums ohne die Verwendung von hoch-verzweigtem und/oder dendritischem Polyol.

| | Bestandteile | OH-Zahl | OH-Funktionalität | Masse/g |
|---|---|---|---|---|
| Polyolkomponente: | Pölyetherpolyöl basierend auf Ethylendiamin und Propylenoxid | 480 | 4 | 20 |
| | 1,4-Butandiol | 1240 | 2 | 10 |
| | Polyetherpolyol basierend auf Trimethylolpropan (TMP) | 860 | 3 | 10 |
| | Wasser | 6250 | 2 | 0.25 |
| | Polysiloxan (Zellstabilisator) | ./. | ./. | 3 |
| | Dimorpholindiethylether (Katalysator) | ./. | ./. . | 1.2 |
| | | NCO-Gehalt /% | NCO-Funktionalität | Masse/g |
| Polyisocyanakomponente: | Basierend auf Methylendiphenyldiisoeyanat (MDI) und polymeren Homologen des MDI | 31 | 2,7 | 86 |

Die Druckfestigkeit dieses Vergleichs-Polyurethanschaums senkrecht zur Schäumungsrichtung beträgt bei einer Dichte von 0,12 g/cm$^3$ lediglich 1,1 MPa.

Damit ist aber ersichtlich, daß sich erfindungsgemäß durch die Verwendung der hoch-verzweigten und/oder dendritischen Polyole eine signifikante Steigerung der Druckfestigkeit bei gleichbleibender Dichte, das heißt ein erhöhtes Verhältnis von Druckfestigkeit zu Dichte erzielen läßt.

## Patentansprüche

1. Verwendung von hoch-verzweigten und/oder dendritischen Polyolen mit einer zahlenmittleren Molmasse (Mn) von 500 bis 100.000 g/Mol, vorzugsweise 1.000 bis 10.000 g/Mol, und einer durchschnittlichen OH-Funktionalität pro Molekül von 10 bis 1000, vorzugsweise von 25 bis 100, als Polyol für die Herstellung von Polyurethanschäumen mit einem erhöhten Verhältnis von Druckfestigkeit zu Dichte.

2. Verwendung nach Anspruch 1, **dadurch gekennzeichnet, daß** das hoch-verzweigte und/oder dendritische Polyol einen durchschnittlichen Verzweigungsgrad von größer Null bis kleiner oder gleich 1,0, vorzugsweise von 0,2 bis 0,66 aufweist.

3. Verwendung nach den Ansprüchen 1 oder 2, **dadurch gekennzeichnet, daß** das hoch-verzweigte und/oder dendritische Polyol eine OH-Zahl von 50 bis 5.000, vorzugsweise von 200 bis 1.000 aufweist.

4. Verwendung nach mindestens einem der Ansprüche 1 bis 3, **dadurch gekennzeichnet, daß** das hoch-verzweigte und/oder dendritische Polyol ein Polyether-Polyol und/oder ein Polyester-Polyol ist.

5. Zweikomponenten-Schaumsystem für die Herstellung von Polyurethanschäumen mit erhöhtem Verhältnis von Druckfestigkeit zu Dichte, mit einer Polyisocyanatkomponente (A) und einer reaktive Wasserstoffatome aufweisende Verbindungen enthaltenden Komponente (B) (Polyolkomponente), die in getrennten Behältern vorliegen und zur Anwendung durch Vermischen zur Reaktion bringbar sind, **dadurch gekennzeichnet, daß** die Polyolkomponente (B) 1 bis 50 Gew.-%, vorzugsweise 2 bis 30 Gew.-%, bezogen auf das Gewicht der reaktive Wasserstoffatome aufweisenden Verbindungen der Polyolkomponente (B), mindestens eines hoch-verzweigten und/oder dendritischen Polyols (B1) mit einer zahlenmittleren Molmasse (Mn) von 500 bis 100.000 g/Mol, vorzugsweise 1.000 bis 10.000 g/Mol und einer durchschnittlichen OH-Funktionalität pro Molekül von 10 bis 1.000, vorzugsweise von 25 bis 100, enthält.

**6.** Zweikomponenten-Schaumsystem nach Anspruch 5, **dadurch gekennzeichnet, daß** das hoch-verzweigte und/ oder dendritische Polyol einen durchschnittlichen Verzweigungsgrad von von größer Null bis kleiner oder gleich 1,0, vorzugsweise von 0,2 bis 0,66 aufweist.

**7.** Zweikomponenten-Schaumsystem nach Anspruch 5 oder 6, **dadurch gekennzeichnet, daß** das hoch-verzweigte und/oder dendritische Polyol eine OH-Zahl von 50 bis 5.000, vorzugsweise von 200 bis 1.000 aufweist.

**8.** Zweikomponenten-Schaumsystem nach mindestens einem der Ansprüche 5 bis 7, **dadurch gekennzeichnet, daß** das hoch-verzweigte und/oder dendritische Polyol ein Polyether-Polyol und/oder ein Polyester-Polyol ist.

**9.** Zweikomponenten-Schaumsystem nach mindestens einem der Ansprüche 5 bis 8, **dadurch gekennzeichnet, daß** die Polyisocyanatkomponente (A) mindestens ein Polyisocyanat mit einem NCO-Gehalt von 5 bis 55%, vorzugsweise 20 bis 50%, und einer durchschnittlichen Anzahl von 2 bis 5, vorzugsweise 2 bis 4 NCO-Gruppen pro Molekül umfaßt.

**10.** Zweikomponenten-Schaumsystem nach Anspruch 9, **dadurch gekennzeichnet, daß** die Polyisocyanatkomponente (A) ein Polyisocyanat auf der Grundlage von Methylendiphenyldüsocyanat und/oder polymeren Homologen davon umfaßt.

**11.** Zweikomponenten-Schaumsystem nach Anspruch 10, **dadurch gekennzeichnet, daß** die Polyisocyanatkomponente (A) ein Polyisocyanat auf der Grundlage von Methylendiphenyldüsocyanat und/oder polymeren Homologen davon mit einem NCO-Gehalt von 31% und durchschnittlich 2,7 NCO-Gruppen pro Molekül umfaßt.

**12.** Zweikomponenten-Schaumsystem nach mindestens einem der Ansprüche 5 bis 11, **dadurch gekennzeichnet, daß** die Polyolkomponente (B) neben dem hoch-verzweigten und/oder dendritischen Polyol (B1) mindestens ein Polyol (B2) mit einer OH-Zahl von 30 bis 1.000, vorzugsweise 500 bis 1.000 und einer durchschnittlichen OH-Funktionalität pro Molekül von 2 bis 7, vorzugsweise 2 bis 5 umfaßt.

**13.** Zweikomponenten-Schaumsystem nach Anspruch 12, **dadurch** gekennzeiclanet, daß das Polyol (B2) mindestens ein Polyether-Polyol und/oder Polyester-Polyol mit einer OH-Zahl von 300 bis 1.000, vorzugsweise 500 bis 1000 und einer durchschnittlichen OH-Funktionalität von 2 bis 7, vorzugsweise 2 bis 4 und/oder mindestens ein Aminopolyether-Polyol und/oder ein Polyol auf der Grundlage von Phosphorsäureestern mit einer OH-Zahl von 30 bis 1.000, vorzugsweise 100 bis 300 und einer durchschnittlichen OH-Funktionalität pro Molekül von 2 bis 7, vorzugsweise 3 bis 5 umfaßt.

**14.** Zweikomponenten-Schaumsystem nach mindestens einem der Ansprüche 5 bis 13, **dadurch gekennzeichnet, daß** die Kennzahl der PolyurethanReaktion im Bereich von 95 bis 165, vorzugsweise 102 bis 120 liegt.

**15.** Zweikomponenten-Schaumsystem nach mindestens einem der Ansprüche 5 bis 14, **dadurch gekennzeichnet, daß** die Polyolkomponente (B) Wasser in einer Menge die einen Polyurethanschaum mit einer Schaumdichte von 0,02 bis 0,5 g/cm$^3$, vorzugsweise von 0,05 bis 0,3 g/cm$^3$ ergibt, einen oder mehrere Katalysatoren für die Polyurethanbildungsreaktion und gegebenenfalls einen Schaumzellenstabilisator enthält.

**16.** Zweikomponenten-Schaumsystem nach Anspruch 15, **dadurch gekennzeichnet, daß** die Polyolkomponente (B) als Katalysatoren für die Polyurethanbildungsreaktion ein oder mehrere tertiäre Amine, vorzugsweise Dimorpholindiethylether enthält.

**17.** Zweikomponenten-Schaumsystem nach einem der Ansprüche 9 oder 10, **dadurch gekennzeichnet, daß** die Polyolkomponente (B) als Schaumzellenstabilisator ein Polysiloxan enthält.

**18.** Zweikomponenten-Schaumsystem nach mindestens einem der Ansprüche 5 bis 17, **dadurch gekennzeichnet, daß** die Polyisocyanatkomponente (A) und/oder die Polyolkomponente (B) übliche Füllstoffe, Hilfsstoffe und/oder Additive in üblichen Mengen enthalten.

**19.** Zweikomponenten-Schaumsystem nach Anspruch 18, **dadurch gekennzeichnet, daß** es 0 bis 40 Gew.-%, vorzugsweise 1 bis 20 Gew.-% eines Füllstoffs ausgewählt aus Sand, Kreide, Perlite, Glasfasern, Ruß oder Mischungen davon, 0 bis 2 Gew.-%, vorzugsweise 0,1 bis 1 Gew.-% eines oder mehrerer Farbstoffe und/oder 0 bis 40 Gew.-%, vorzugsweise 1 bis 20 Gew.-% eines brandhemmenden Additivs, jeweils bezogen auf das Gewicht des Zweikomponenten-Schaumsystems, enthält

**20.** Zweikomponenten-Schaumsystem nach mindestens einem der Ansprüche 5 bis 19, **dadurch gekennzeichnet, daß** die Behälter, welche die Polyisocyanatkomponente (A) bzw. die Polyolkomponente (B) enthalten, über Zuführungsleitungen mit einer Abgabeeinrichtung mit Mischkopf, in dem die Komponenten vermischt werden, verbunden sind.

**21.** Zweilcomponenten-Schaumsystem nach Anspruch 20, **dadurch gekennzeichnet, daß** die Abgabeeinrichtung einen Mischkopf in Form eines mit einem statischen Mischer versehenen Mundstücks aufweist.

**22.** Zweikomponenten-Schaumsystem nach Anspruch 20 oder 21, **dadurch gekennzeichnet, daß** die Behälter mit Auspreßeinrichtungen versehen sind, über welche die Polyisocyanatkomponente (A) und die Polyolkomponente (B) in den Mischkopf der Abgabeeinrichtung ausgebracht werden können.

**23.** Zweikomponenten-Schaumsystem nach Anspruch 22, **dadurch gekennzeichnet, daß** es als Auspreßeinrichtungen mechanische Preßeinrichtungen und/oder Treibgase, die in der Polyisocyanatkomponente (A) und der Polyolkomponente (B) und/oder in der Druckkammer einer Zweikammerkartusche für diese Komponenten enthalten sind, umfaßt.

**24.** Verwendung des Zweikomponenten-Schaumsystems nach mindestens einem der Ansprüche 5 bis 23 als Montageschaum, insbesondere für die Montage von Tür- und Fensterzargen oder von Treppen und/oder als Brandschutzschaum zur Abdichtung von Durchbrüchen und/oder Durchführungen in Wänden und/oder Decken von Gebäuden.

**25.** Verwendung nach Anspruch 24, **dadurch gekennzeichnet, daß** man die Polyisocyanatkomponente (A) und die Polyolkomponente (B) des Zweikomponenten-Schaumsystem mit Hilfe der Abgabeeinrichtung mit Mischkopf vermischt und in die Montagefugen, den Durchbruch und/oder die Durchführung einbringt und dort aufschäumen und aushärten läßt.

**Europäisches Patentamt**

**EUROPÄISCHER RECHERCHENBERICHT**

Nummer der Anmeldung

EP 05 11 0375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/062297 A (PERSTORP SPECIALTY CHEMICALS AB; HAEGGMAN, BO; BJOERNBERG, HAAKAN; MAG) 31. Juli 2003 (2003-07-31) *Beispiel 4, Probe 2* ----- | 1-25 | C08G18/48 C08L101/00 |
| X | WO 02/10247 A (WOODBRIDGE FOAM CORPORATION) 7. Februar 2002 (2002-02-07) * Beispiel 1 * ----- | 1-25 | |
| X | WO 03/064491 A (WOODBRIDGE FOAM CORPORATION) 7. August 2003 (2003-08-07) * Beispiel 1 * ----- | 1-25 | |

RECHERCHIERTE SACHGEBIETE (IPC)

C08G
C08L

Der vorliegende Recherchenbericht wurde für alle Patentansprüche erstellt

| Recherchenort | Abschlußdatum der Recherche | Prüfer |
|---|---|---|
| München | 24. Februar 2006 | Müller, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 11 0375

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| WO 03062297 | A | 31-07-2003 | SE | 523962 C2 | 08-06-2004 |
| | | | SE | 0200208 A | 26-07-2003 |
| WO 0210247 | A | 07-02-2002 | AU | 777710 B2 | 28-10-2004 |
| | | | AU | 7622601 A | 13-02-2002 |
| | | | BR | 0107276 A | 27-08-2002 |
| | | | CA | 2394563 A1 | 07-02-2002 |
| | | | CZ | 20021811 A3 | 12-03-2003 |
| | | | EP | 1248809 A1 | 16-10-2002 |
| | | | JP | 2004505140 T | 19-02-2004 |
| | | | MX | PA02012835 A | 21-05-2003 |
| | | | PL | 356275 A1 | 28-06-2004 |
| WO 03064491 | A | 07-08-2003 | CA | 2417542 A1 | 28-07-2003 |

EPO FORM P0461

Für nähere Einzelheiten zu diesem Anhang : siehe Amtsblatt des Europäischen Patentamts, Nr.12/82